(19) Europäisches Patentamt
European Patent Office
Office européen des brevets

(11) Publication number: **0 161 114 A2**

# (12) EUROPEAN PATENT APPLICATION

(21) Application number: 85303279.5

(22) Date of filing: 09.05.85

(51) Int. Cl.[4]: C 07 C 69/593
A 01 N 37/06

(30) Priority: 11.05.84 GB 8412049

(43) Date of publication of application: 13.11.85 Bulletin 85/46

(84) Designated Contracting States: AT BE CH DE FR IT LI NL SE

(71) Applicant: UNILEVER NV
Burgemeester s'Jacobplein 1 P.O. Box 760
NL-3000 DK Rotterdam(NL)

(72) Inventor: Chaudhari, Sunetra Narayan Kar
1B Anusandhan P.O. Sahar Andheri East
Bombay 400 099 Maharashtra(IN)

(72) Inventor: Bhaskaran, Sridhara
2C Anusandhan P.O. Sahar Andheri East
Bombay 400 099 Maharashtra(IN)

(72) Inventor: Menon, Kuruvakkat Kochu Govind
3 Alhambra 3 Carmichael Road
Bombay 400 026 Maharashtra(IN)

(74) Representative: Butler, David John et al,
Unilever PLC Patents Division P.O. Box 68 Unilever House
London EC4P 4BQ(GB)

## (54) Compounds and compositions influential on the growth and yield of plants.

(57) The growth and economic yield of the plants can be influenced by treating whole plants, or roots, seeds, or soil, with an aliphatic acid ester of a diol having the general formula

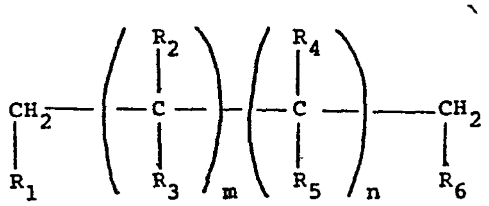

wherein $R_1$ is hydrogen or OH, $R_2$ is hydrogen or OH or alkyl ($C_1$-$C_4$), $R_3$ is hydrogen, OH or alkyl ($C_1$- $C_4$), $R_4$ is hydrogen, OH or alkyl ($C_1$-$C_4$), $R_5$ is hydrogen or OH or alkyl ($C_1$-$C_4$), $R_6$ is hydrogen or OH, m is any number from 0 to 30, n is any number from 0 to 30, (m+n) is not more than 30 and the aliphatic acid (or, in the case of a di-ester, at least one of the aliphatic acids) contains from 4 to 36 carbon atoms. Preferred compounds are mono- and di-esters in which the diol is 1,3-propane diol or (dl) 2-methyl 1,4-butane diol and the aliphatic acid is oleic, linoleic, or linolenic acid. The esters of (dl) 2-methyl 1,4-butane diol are novel compounds.

EP 0 161 114 A2

Croydon Printing Company Ltd.

# COMPOUNDS AND COMPOSITIONS INFLUENTIAL ON THE GROWTH AND YIELD OF PLANTS

The present invention relates to chemical compounds and compositions influential on the growth and yield of plants, and to the use of such compounds and compositions.

By the invention, it has been discovered that certain diol esters can influence plant growth. Such compounds can be used as active ingredients in plant treatment compositions which enable the economic yield of plants to be improved. The invention can be applied to a wide variety of commercial crops, particularly vegetables such as peas and beans, plantation crops such as tea, sugar-cane and bananas, and cereal crops such as rice, wheat and millet.

The invention provides a method of influencing plant growth, in which method the plant is treated directly or indirectly with an effective amount of a diol ester having a beneficial influence on the growth of the plant. In this specification the expression "treatment of plants" is used to include any procedure in which plant growth or

yield is influenced. This may involve treatment of whole plants, or parts of plants such as roots, seeds, or plant tissue in a clonal propagation system. The treatment of a growing medium, such as soil, prior to or following the sowing of seed or planting of plants is also included.

The diol esters useful in the context of the invention are aliphatic acid esters of diols having the general formula:

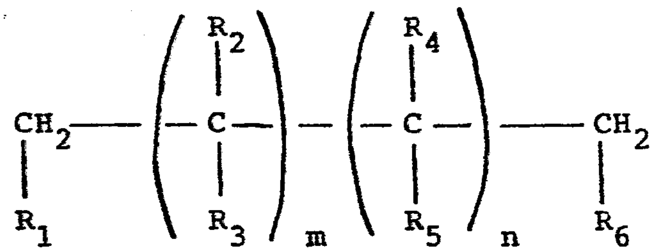

wherein $R_1$ is hydrogen or OH, $R_2$ is hydrogen or OH or alkyl ($C_1$-$C_4$), $R_3$ is hydrogen, OH or alkyl ($C_1$-$C_4$), $R_4$ is hydrogen, OH or alkyl ($C_1$-$C_4$), $R_5$ is hydrogen or OH or alkyl ($C_1$-$C_4$), $R_6$ is hydrogen or OH, m is any number from 0 to 30, n is any number from 0 to 30, (m+n) is not more than 30 and the aliphatic acid (or, in the case of a di-ester, at least one of the aliphatic acids) contains from 4 to 36 carbon atoms. In the general formula given above, (m+n) is preferably not greater than 7, more preferable not greater than 3, and most preferable 1 or 2. In a diol di-ester containing only one long-chain aliphatic acid residue the second diol hydroxide group is esterified with a short-chain ($C_1$-$C_3$) aliphatic acid such as acetic or propionic. We believe that it is the presence of one or two long-chain aliphatic acid residues in the diol ester that confers on the compound the ability to influence plant growth. The presence or absence of a

short-chain aliphatic residue is not seen as being influential in this respect. Preferably, the two hydroxyl groups of the diol are not on the same carbon atom. Further preferred sub-classes within this broad class of diol esters are compounds wherein $R_2$, $R_3$, $R_4$ and $R_5$ are all hydrogen, and compounds wherein either $R_2$ or $R_4$ is alkyl (preferably methyl) with the other group being hydrogen and preferably with $R_3$ and $R_5$ also being hydrogen.

A major aspect of the invention is a process for the preparation of a composition useful in the treatment of plants, involving the esterification of a diol as defined above with one or two $C_4$-$C_{36}$ aliphatic acids, and formulating the resulting reaction product into a concentrated composition that, when diluted with water, provides a composition that can be applied to plants, seeds, roots or soil.

The broad class of diol esters that fall within the general context of the invention includes many chemical compounds. These will exert different degrees of influence on the growth of different plant species. Performance differences between plant species will generally be a matter of degree. In general, the influence on growth will be observed as a direct increase on growth rate. In some instances, the influence will be observed in terms of growth inhibition. Such growth inhibition can still be exploited to commercial advantage in chosen plant species if the application of the treatment to the plant is timed such that growth inhibition causes the resources of the plant to be diverted to the production of useful material at a later stage in the life of the plant. It can thus be stated that, although the influence of individual members of the class of compounds with which the invention is concerned

will vary quite markedly, the class of compounds as a whole is useful.

The class of compounds includes monoesters and diesters. In general, we have observed that diesters of long-chain acids exert a stronger influence on plant growth and these are therefore preferred.

The long-chain aliphatic acid residue (or each of such residues in the case of a diester) should contain at least 4, preferably at least 12 carbon atoms. In general, each individual aliphatic acid residue should not contain more than 36 carbon atoms, and more usually not more than 30 carbon atoms. Aliphatic acid residues of carbon chain length of at least 14, but not more than 20 atoms are more preferred. Esters of $C_{16}$ and $C_{18}$ aliphatic acids are particularly effective, and are most preferred. In the case of a diester containing two long-chain aliphatic acid residues, these will generally be of the same acid, but this is not seen as an essential requirement.

The long-chain aliphatic acid carbon residue can be saturated or unsaturated. We have observed that diol esters incorporating one or two unsaturated long-chain acid residues tend to be more effective in influencing plant growth, and therefore unsaturated compounds are preferred. The degree of unsaturation will generally be from 1 to 3 double bonds per acid residue.

Esters of $C_2$-$C_5$ diols, especially ethylene glycol, 1,3-propane diol and (dl) 2-methyl 1,4-butane diol are preferred.

Monoesters, and more preferably diesters, of linoleic acid or linolenic acid or oleic acid with either 1,3-propane diol or (dl) 2-methyl 1,4-butane diol are

particularly effective plant growth influencing agents in the context of the invention.

The diol esters of the invention have not previously been recognised as being useful active components in plant treatment compositions. The broad class of diol esters as hereinbefore defined includes some chemical compounds not previously known per se.

In particular, we believe that the mono- and di-esters of (dl) 2-methyl 1,4-butane diol with long-chain aliphatic acids, particularly oleic, linoleic and linolenic acid, are novel compounds. These novel compounds belong to the class of diol esters having the general formula:

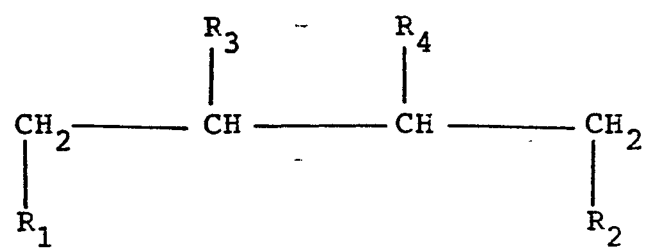

wherein $R_1$ is OH or an aliphatic acid residue containing from 1-36 carbon atoms, $R_2$ is an aliphatic acid residue containing from 4-36 carbon atoms, $R_3$ is hydrogen or methyl, and $R_4$ is hydrogen or methyl with the proviso that $R_3$ and $R_4$ cannot both be methyl. The various preferred limitations of the carbon chain lengths, linearity, and degrees of unsaturation given earlier in this specification with regard to the diol esters apply equally to the aliphatic acid residues $R_1$ and $R_2$ in the above formula. These compounds can be synthesised using the chemical proceedures described in this specification.

Many of these diol esters can be found in nature and are therefore extractable from natural sources. Alternatively, they can be synthesised relatively easily. As an example, a suitable synthetic route comprises converting the appropriate aliphatic acids first to the acid chlorides by reacting with conventional chlorinating agents like thionylchloride, phosphorous pentachloride or oxalyl chloride, and then reacting the acid chlorides thus prepared with the diol to produce a mixture of mono and diesters of the diol. The ratio of mono and diesters can be varied by controlling, for example, the feed ratio of reactants, the type of solvent and time of reaction. Alternatively, a single step process can also be employed wherein the acid and the diol are made to react in the presence of an acid catalyst, eg para-toluene sulphonic acid or borontrifluoride etherate, and continuously removing the water produced, eg through a condenser attachment to the reaction vessel. Further alternative routes for synthesising the diol esters involve such procedures as: transesterification, or transalcoholysis, or reduction of monoglycerides and diglycerides, or the extension of the chain length of short-chain diol esters having terminal functional groups.

An important aspect of the invention is a commercial process for the manufacture of an active component useful in plant treatment compositions, by the esterification of a diol of the type hereinbefore defined with one or more commercially-available long-chain aliphatic acids, preferably containing from 12-36 carbon atoms. This process involves the esterification of the diol and aliphatic acid(s) in a suitable solvent in an enclosed reaction vessel equipped with means for maintaining the reaction temperature at or near the reflux temperature of the reactant/solvent mixture, and with means for removing water generated during the reversible esterification

reaction so that the reaction is driven in the direction of esterification. A preferred embodiment of the invention is a process for the preparation of a plant treatment composition in concentrate form, in which process a diol containing from 2-5 carbon atoms is reacted with one or more $C_{16}$-$C_{18}$ unsaturated aliphatic acids in a water-immiscible organic solvent, and optionally in the presence of an esterification catalyst, the reaction being conducted at elevated temperature in an enclosed reaction vessel fitted with means for re-cycling the solvent/reactant mix and separating therefrom water generated during the reaction, and following termination of the reaction the reaction product is recovered and formulated into a concentrate dilutable with water to provide a plant treatment composition.

By way of example only, this commercial process will be described with reference to the esterification of propane-1,3 diol or (dl) 2-methyl 1,4-butane diol with commercially-available oleic, linoleic or linolenic acid. A blend of such acids can be used if desired. The reactants should be dissolved in a suitable water-immiscible solvent such as toluene, xylene or benzene. Of these solvents, toluene is prefered because its boiling point (about 110°C) is lower, and possible thermal degradation of the reactants and products is less likely. A catalyst, such as PTSA, can be included to promote the esterification reaction. The reactant mix is placed in an enclosed reaction vessel fitted with an agitation means and also means for heating the vessel to maintain the temperature of the contents at or near the reflux temperature. In the case of a toluene-based reaction mix, the optimum temperature will be approximately 110-115°C. Such a temperature can be maintained for example by having a steam-jacketed reaction

vessel and supplying superheated steam at, for example, a temperature of 130-140°C and a pressure of 40-50 psi to the steam jacket. The reaction vessel should also be fitted with means for removing water generated during the esterification reaction. This can be achieved by recycling the liquid contents of the vessel through a condenser and into a chamber in which the chilled liquids can separate into a toluene layer and an aqueous layer. The toluene layer can be recycled back into the reaction vessel, and the aqueous layer discarded. By the continuous removal of water in such a manner, the reversible esterification reaction can be driven until a very high degree of reactant usage has taken place. Following effective completion of the esterification reaction, the solvent can be distilled and the residue will constitute the desired active component. The solvent (toluene, xylene, heptane, benzene), diol:acid ratio, time of reaction, amount of catalyst (normally, about 50 mg per 5 g of the acid) and type of catalyst (PTSA/$BF_3$-etherate/$H_2SO_4$) influence the total yield as well as the diester:monoester ratio. Preferably the initial charge of reactants will include a slight excess of aliphatic acid and the resulting product on completion of the esterification reaction should contain typically from 95-98% ester and 2-5% unreacted aliphatic acid. If desired, the excess acid can be removed by washing with dilute alkali such as aqueous sodium bicarbonate. Alternatively, the excess acid can simply be neutralised with an alkali, such as sodium bicarbonate, and left in the product in the form of a soap. This soap does not interfere with the plant growth promoting properties of the product, and indeed can be of assistance in formulating the reaction product into a plant treatment composition. The surfactant properties of the soap assist in the preparation, for example, of an aqueous emulsion of the reaction product. In this embodiment of the invention

advantage is taken of the fact that commercial grades of unsaturated aliphatic acids, such as oleic acid, typically contain small proportions of other long-chain aliphatic acids. At least some of these minor components will be other acids which, when esterified with diols, produce diol esters that are also influential on plant growth. Thus it is expected that the reaction product made according to this embodiment of the invention, while comprising mainly the mono and/or di ester of the particular aliphatic acid chosen, will also comprise minor amounts of other useful diol esters. To the extent that these minor components are also influential on plant growth they will tend to broaden the spectrum of biological activity of the resulting product, and add to the commercial value of the product.

A plant treatment composition according to the invention will generally contain one or more diol esters in water or in a suitable non-aqueous medium. Because the diol esters are relatively insoluble in water, a suitable carrier liquid or solvent may be used to prepare a stable suspension, dispersion, emulsion or solution. Conventional suspending or emulsifying agents can be incorporated to enhance product uniformity and stability. For example, an aqueous emulsion of a diol ester can be prepared with the aid of commercially-available emulsifying agents, such as polyoxyethylene sorbitan esters, ethoxylated oleyl alcohol and phosphated oleyl alcohol, or with soaps, or with organic solvents.

The quantity of diol ester that will be required to produce an effective growth stimulation in a given plant species will vary, depending on the efficacy of the diol ester chosen and the method of treatment. In general however, an aqueous emulsion or suspension of a diol ester when used, for example, as a spray applied to crops in the

field, will only need to contain a very minute level of the diol ester. Levels of 1 ppm or even less in the spray composition can be effective. For the most preferred diol esters identified above, a level in an aqueous spray composition of from 0.01 to 25 ppm, more preferably from 0.1 to 10 ppm will generally be effective. Taking crop spraying as an example, an application level of 0.005 to 5 gm diol ester per hectare, and preferably at least 0.05 gm/hectare, will be suitable. By way of example only, a single application of 500 litres/hectare of an aqueous spray containing 0.1 ppm diol ester will deliver 0.05 gm/hectare. 250 litres/hectare of an aqueous spray containing 2 ppm will deliver 0.5 gm/hectare. Even with equipment capable of delivering a very fine spray, 100 litres/hectare can be regarded as a practical minimum quantity to ensure that the active constituent is evenly and effectively distributed.

Normally, a composition according to the invention will be supplied in the form of a concentrate intended to be diluted with water in order to provide a composition suitable for spraying or other plant treatments. The concentrate can be an aqueous emulsion, dispersion or suspension. Alternatively, an organic solvent can be used in the concentrate. The organic solvent can be water-miscible or water-immiscible. Suitable examples are methanol, ethanol, iso-propanol and chloroform. In one embodiment of the invention, the concentrate comprises a solution of one or more diol esters in a water-immiscible organic solvent, optionally containing one or more emulsifying agents, and the concentrate is mixed with water to form a dilute emulsion prior to use in a plant treatment. Such concentrates will, of course, contain a very much higher level of diol ester. This higher level will depend on formulation considerations and the extent to which dilution with water is recommended prior to use

in plant treatment. Typically, an aqueous concentrate will contain up to 2000 ppm of diol ester. A non-aqueous concentrate can contain higher levels of diol ester, typically up to about 1% by weight. Additionally, it may be advantageous to add small amounts of antioxidants and anti-microbials to improve shelf-life of the product.

An alternative form of product according to the invention can be prepared by adding a diol ester containing composition to a particulate carrier material to provide a granular product that can be mixed with soil, for example. The carrier material can be any particulate solid that is capable of taking up a reasonable amount of liquid while retaining particle flow properties that enable it to be handled conveniently. Examples of suitable carrier materials include finely divided minerals, such as silicas and clays, e.g. bentonite and Kieselguhr, and synthetic granular materials such as resins and polymers.

There are various possible modes of use of a composition according to the invention in the treatment of plants. Crop spraying has already been mentioned. Alternatively, other methods of application such as pre-treatment of seeds by soaking, dipping of root systems prior to replanting, and treatment of soil prior to or following sowing or planting can all be used. In each instance an aqueous emulsion or suspension of one or more diol esters according to the invention can be used. A level of diol ester required in such treatments will generally be higher than that used in a spray system. Any combination of these alternative forms of treatment can be used. The mode of application of the diol esters can thus be selected to achieve maximum growth influence during phases of plant life, such as germination, growth and reproduction, to derive optimum economic yield.

By way of example only, the synthesis and practical use of certain diol esters in accordance with the invention is described as follows.

## EXAMPLES

### Example 1: Synthesis of diol esters

One mole of the acid was dissolved in benzene in a round-bottom flask (RBF) and mounted on a magnetic stirrer with provisions for heating. The flask was fitted with a water condenser and a calcium chloride guard tube. 1.5 moles of thionyl chloride was taken in an additive funnel and added dropwise to the RBF containing the acid for 15 minutes with constant stirring of the solution. Once the addition of thionyl chloride was over, the whole mixture was refluxed for one hour at 80°C. After cooling, the solvent as well as the excess thionyl chloride were stripped and the product recovered was characterised by IR. The acid chloride thus recovered is a fuming, pungent liquid. The IR showed absorption at 1785-1819 $cm^{-1}$ due to carbonyl group of -COCl.. The absence of absorption at 3400 $cm^{-1}$ (due to hydroxyl group -COOH) and 1710 - 1720 $cm^{-1}$ (due to carbonyl group of -COOH) indicated quantitative conversion of the acid to the acid chloride.

The acid chloride and 1, 3 propane diol were mixed (1:1 mole ratio) in 1, 4 dioxane at ambient temperature and was kept at 15°C for 15 hours. The solvent was stripped and the products (mono- and diester) were separated by preparative TLC.

20 cm x 20 cm glass plates were coated (1 mm thickness) with TLC grade silica gel (silica gel G - with $CaSO_4$, binder, about 13%). In each TLC run, about 60 mg of the product was spotted and developed with

hexane:diethylether:acetic acid, 65:35:1. To separate the product of one batch of reaction product, a number of TLC plates were used. Three bands appeared on the TLC plates of which lowermost and uppermost bands were prominent which were identified to be mono- and diester, respectively. The band in the middle was not characterised. The bands were scraped off, collected in different containers, and separately extracted in sohxlets with chloroform. After stripping the solvent, the product was recovered and was characterised by IR, $^1$H-NMR and GC/MS.

Reagents used

| | | |
|---|---|---|
| 1,3 propane diol/ (dl) 2-methyl 1,4 butane diol | - | from Fluka, Switzerland more than 99% pure (checked by GLC). |
| Linoleic acid | - | from Wilson Lab., Bombay |
| Linolenic acid | - | from TCI, Japan (99% pure). |
| Oleic acid | - | from Riedel, Germany (pure). |
| Palmitic acid | - | from Fluka, Switzerland, more than 99% pure. |
| Stearic acid | - | from Godrej, India (pure). |
| Thionyl chloride | - | from SD Chemicals, India. |
| Benzene | - | from E. Merck, India. |
| 1,4 dioxane | - | from Glaxo, India (Analar). |

The accompanying drawings illustrate a representative sample of the spectra taken of the various compounds synthesised in this Example:

Figure 1 shows the IR spectrum of 1,3-propane diol mono-oleate in chloroform solvent using a cell path of 0.1 mm and air as a reference. All of the compounds

synthesised had similar IR spectra and all showed a strong adsorption at 1720-1740 $cm^{-1}$ approx, indicating the presence of a carbonyl group associated with the ester linkage.

Figure 2 shows a mass spectrum of a mixture of 1,3-propane diol mono- and di-oleate (4:1 approx.).

Figure 3 shows a proton NMR spectrum of 1,3-propane diol mono-oleate.

Figure 4 shows a proton NMR spectrum of 1,3-propane diol di-oleate. The small peak marked (*) indicates the presence of a trace of mono-ester.

Figure 5 shows a proton NMR spectrum of 1,3-propane diol mono-stearate.

Figure 6 shows a proton NMR spectrum of a mixture of 1,3-propane diol mono-linolenate and di-linolenate.

Figure 7 shows a proton NMR spectrum of (dl) 2-methyl 1,4-butane diol mono-linolenate. This should be compared with the data in Table 7.

Figure 8 shows a proton NMR spectrum of (dl) 2-methyl 1,4-butane diol di-linolenate. The peak marked (*) was probably due to a trace of dioxane solvent.

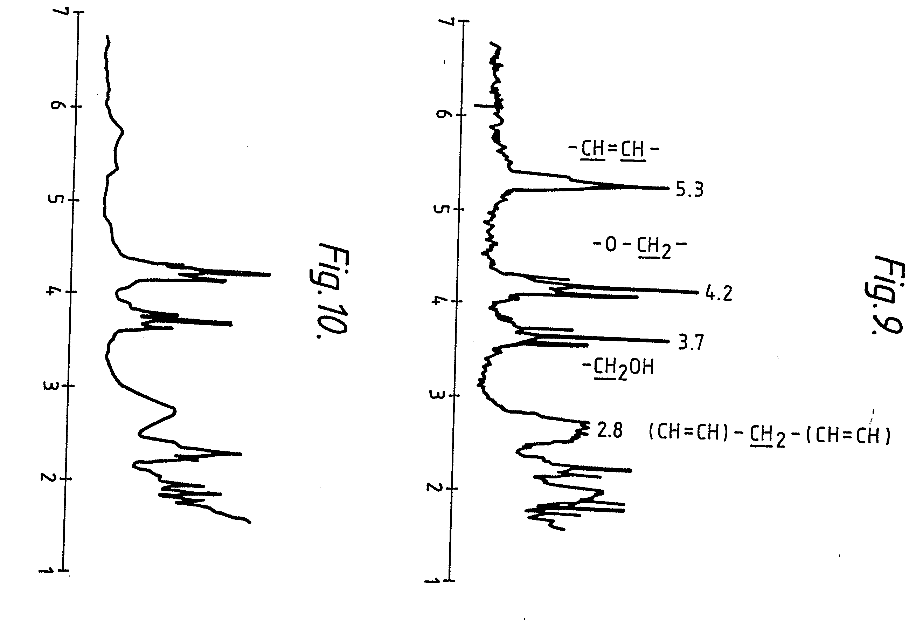

Figures 9 and 10 provide a comparison between the proton NMR spectrum of 1,3 propane diol mono-linolenate as freshly synthesised (Figure 9) and as deliberately degraded (Figure 10) by being kept in the open air under circumstances that would encourage oxidation of the double bonds in the linolenate residues. Figure 9 shows a strong

peak at 5.3 consistent with the presence of unsaturation, whereas in the spectrum of the degraded product this peak is effectively absent.

The principal spectral characteristics of the (dl) 2-methyl 1,4 butane diol esters synthesised in this Example are set out in Table 6.

Example 2: Single step synthesis of diol esters

The procedure involves esterification of 1,3 propane diol/(dl) 2-methyl 1,4 butane diol with oleic acid/linoleic acid/linolenic acid in presence of p-toluene sulphonic acid (PTSA) as the catalyst. The reactants were dissolved in toluene and refluxed for 4 hours, using a Dean-Stark assembly to remove the water produced in the reaction by azeotropic distillation. After the reaction, the solvent was distilled and the product extracted in diethyl ether. To remove the unreacted acid/diol, the product was washed with aqueous sodium bicarbonate and then recovered by removing the diethyl ether by distillation. The diester/monoester ratio was determined by separating the mixture on a preparative TLC plate, and the products characterised by IR, $^{1}H$-NMR and GC/MS.

| | | |
|---|---|---|
| 1,3 propane diol | - | from BDH (97% pure) |
| (dl)2-methyl 1,4 butane diol | - | from Wilson Lab. Bombay |
| PTSA | - | from SISCO Research Lab. (98% pure) |
| Toluene | - | from E. Merck, India. |
| Oleic acid/linoleic acid | - | from Wilson Lab. Bombay. |
| Linolenic acid | - | from Fluka AG, Switzerland. |

Example 3: Preparation of emulsions:

Because none of the compounds was soluble in water, they were made into emulsions with "Tweens". The stock solution had a concentration of 20 ppm of the active, 20 ppm of "Tween 40" (polyoxyethylene sorbitan monopalmitate) and 20 ppm of "Tween 80" (polyoxyethylene sorbitan monooleate). To protect it from microbials, 0.2 per cent of ammonia was added. This emulsion was diluted to 1 ppm before spraying.

Example 4: Testing of the biological activity of spray compositions (actives in aqueous emulsions)

a) Root length of paddy seedlings

Paddy seeds were soaked in water for 24 hours and then placed on glass plates lined with moistened filter paper. The seeds were allowed to grow for 4 days and seedlings of almost equal root lengths were selected (about 15 per plate and 10 plates per experiment) and sprayed with 1 ppm of emulsions of the active. Equal population of seedlings sprayed with distilled water served as control. After 4 days, root length of each seedling was measured and the mean root length of the seedlings per plate was determined. These mean values were then subjected to Student's 't' test to determine if the increase in root length was statistically significant with respect to the control.

b) Fresh and dry weights of shoots of wheat seedlings

Wheat seeds were allowed to soak in water for 24 hours. Then they were placed in petri dishes lined with moistened filter paper and allowed to grow for 3 days (25 seeds per plate, 5 plates per experiment). 20 ml of

full strength Hoagland's nutrient solution was added to the dishes on the third day of growth and on the fifth day the seedlings were sprayed with 1 ppm of emulsion of the active. On the tenth day, the plants were harvested, the shoots were collected by cutting the roots, blotted dry with filter paper and weighed. This was recorded as the fresh weight. For determining the dry weight, the shoots were wrapped in an aluminium foil and kept in an oven at 80°C for a minimum of 24 hours till it attained a constant weight. The control samples were subjected to the same procedure excepting that instead of spraying with 1 ppm of the active, these were sprayed with distilled water.

c) Results

The results of the biological activity tests with 1,3-propane diol mono and diesters of palmitic, stearic, oleic, linoleic and linolenic acids, are given in Table 1, while those with (dl) 2-methyl-1,4-butane diol are given in Table 2. All the esters individually indicated positive effects on the increase in root length. Similar beneficial effects were observed in fresh and dry weight gain.

d) Further testing

Table 3 gives biological activity data (obtained by the root length assay previously described) for a blend of 1,3-propane diol esters. The diol esters were prepared from commercial raw materials, namely 1,3-propane diol (99% pure) and oleic acid (containing 12.5% palmitic acid, 3% stearic acid, 75.7% oleic acid and 8.7% linoleic acid). The ratio of mono-esters to di-esters in the mixture was 21:79. Table 3 also records data on the effect of this diol ester mixture on the chlorophyl content and rate of photosynthesis in the test plants.

Table 4 records field trial data on the effects of the same propane-diol ester mixture (as in Table 3) on rice grown on a farm in India during the 1984 monsoon season. This field trial was conducted using a randomised block design trial with a replication number of 4.

Table 5 records the relative biological activity, established by the root length assay described above, for certain diol esters and the compounds from which they are derived. These results confirm the unique activity of the diol esters.

Table - 1 BIOLOGICAL ACTIVITY OF 1,3 PROPANE DIOL ESTERS (DOSE 1 ppm)

| | *PEM | *PED | *SEM | *SED | *OEM | *OED | *LEEM | *LEED | *LEM | *LED |
|---|---|---|---|---|---|---|---|---|---|---|
| Root length bioassay | (Paddy seedlings) | | | | | | | | | |
| Treated (mm) | 95.8 | 93.6 | 97.6 | 95.3 | 95.9 | 100.5 | 125.8 | 128.6 | 99.5 | 101.2 |
| Control (mm) | 94.5 | 92.3 | 94.5 | 93.3 | 93.3 | 93.3 | 115.8 | 115.8 | 93.3 | 93.3 |
| Increase (mm) | 1.3 | 1.3 | 3.1 | 2.0 | 2.6 | 7.2 | 8.6 | 11.0 | 6.2 | 7.9 |
| Statistical 't' value | 0.9 | 3.0 | 1.2 | 7.6 | 5.8 | 10.4 | 2.3 | 3.5 | 11.9 | 16.2 |
| Statistical significance | NS | S | NS | S | S | S | S | S | S | S |
| Fresh & Dry Weight | (Wheat seedlings) | | | | | | | | | |
| Fresh weight | | | | | | | | | | |
| Control (mg) | - | 63.0 | - | 63.0 | 63.0 | 63.0 | 63.0 | 63.0 | 63.0 | 63.0 |
| Treated (mg) | - | 66.0 | - | 65.0 | 68.0 | 71.0 | - | - | 71.0 | 69.0 |
| % Increase | - | 4.8% | - | 3.2% | 7.9% | 12.7% | - | - | 12.7% | 9.5% |
| Dry weight | | | | | | | | | | |
| Control (mg) | - | 7.6 | - | 7.6 | 7.6 | 7.6 | 10.15 | 10.15 | 7.6 | 7.6 |
| Treated (mg) | - | 7.9 | - | 7.8 | 8.3 | 8.6 | 10.28 | 10.45 | 8.5 | 8.2 |
| % Increase | - | 4.1% (NS) | - | 3.2% (NS) | 9.9% (S) | 13.4% (S) | 1.3 (NS) | 3.6 (NS) | 13.1% (S) | 9.1% (S) |

*PEM (Palmitate mono) *PED (Palmitate di) *SEM (Stearate mono) *SED (Stearate di)
*OEM (Oleate mono) *OED (Oleate di) *LEM (Linolenate mono) *LED (Linolenate di)
*LEEM (linoleate mono) *LEED (linoleate di)
S = Statistically significant NS = non-significant

Table - 2 BIOLOGICAL ACTIVITY OF (dl) 2-METHYL 1,4 BUTANE DIOL ESTERS (DOSE 1 ppm)

| Root length bioassay (Paddy seedlings) | *SEM | *SED | *OEM | *OED | *LEEM | *LEED | *LEM | *LED |
|---|---|---|---|---|---|---|---|---|
| Control (mm) | 115.8 | 118.1 | 147.2 | 147.2 | 151.5 | 151.5 | 171.4 | 171.4 |
| Treated (mm) | 122.1 | 120.6 | 151.1 | 154.4 | 158.6 | 160.4 | 180.7 | 183.7 |
| Increase (mm) | 5.4 | 2.1 | 3.8 | 7.2 | 7.1 | 8.9 | 9.3 | 12.3 |
| Statistical 't'value | 2.7 | 1.0 | 2.2 | 4.1 | 3.8 | 4.4 | 3.8 | 5.6 |
| Statistical significance | S | NS | S | S | S | S | S | S |

*OEM(Oleate mono) *OED(Oleate di) *LEEM(Linoleate mono) *LEED(Linoleate di)
*LEM(Linolenate mono) *LED(Linolenate di)
*SEM(Stearate mono) *SED(Stearate di)

TABLE 3 BIOLOGICAL ACTIVITY OF 1,3 PROPANE DIOL ESTERS (AS A 21:79 MONO:DIESTER MIXTURE) AT DIFFERENT CONCENTRATIONS

| SAMPLE = OEM+OED 21:79 | Root Length Bioassy (in mm) | | | Chlorophyll Content (in mg/g fresh weight) | | |
|---|---|---|---|---|---|---|
| CONCENTRATION | Control | Treated | % increase | Control | Treated | % increase |
| 0.1 ppm | 186.9 | 192.0 | 2.7 | - | - | - |
| 1.0 ppm | 186.9 | 201.7 | 7.9 | - | - | - |
| 2.0 ppm | 186.9 | 205.4 | 9.9 | 2.405 | 2.585 | 7.5 |
| 5.0 ppm | 186.9 | 199.3 | 6.6 | 2.405 | 3.083 | 28.2 |

| | Photosynthesis (in mg $CO_2/dm^2/hour$) | | | Dry Weight (in mg) | | |
|---|---|---|---|---|---|---|
| CONCENTRATION | Control | Treated | % increase | Control | Treated | % increase |
| 0.1 ppm | - | - | - | 17.9 | 19.5 | 8.9 |
| 1.0 ppm | - | - | - | 17.9 | 20.9 | 16.6 |
| 2.0 ppm | 4.41 | 5.30 | 20.2 | 17.9 | 19.7 | 9.7 |
| 5.0 ppm | 4.41 | 4.99 | 13.1 | 17.9 | 19.9 | 11.2 |

TABLE 4 FIELD TRIAL RESULTS OF OLEATE ESTERS OF 1,3 PROPANE DIOL (AS A MIXTURE, MONO:DIESTER, 21:79) ON RICE GRAIN YIELD

| SAMPLE CONCENTRATION | YIELD/20 HILLS (grams) | YIELD. Kg/plot | YIELD. kg/ha | PERCENT INCREASE |
|---|---|---|---|---|
| Control | 290 | 4.00 | 2500 | - |
| 2.5 ppm | 325 | 4.50 | 2812 | 12.5 |
| 5.0 ppm | 326 | 4.57 | 2856 | 14.2 |
| Statistical significance | S | S | S | - |
| Critical Difference at $p = 0.05$ level of significance | 11.6 | 0.23 | 143 | - |

TABLE 5

BIOLOGICAL ACTIVITY OF DIOLS, ACIDS AND DIOL ESTERS
ROOT LENGTH BIOASSAY (dose - 1 ppm)

| Compounds | Biological Activity |
|---|---|
| Linolenic Acid | Inactive |
| Linoleic Acid | Inactive |
| 1,3 Propane Diol | Inactive |
| (dl) 2-Methyl 1,4 Butane Diol | Inactive |
| Ethylester of Linolenic Acid | Inactive |
| 1,3 Propane Diol Mono- and Di-Esters of Linolenic Acid | Highly Active |
| (dl) 2-Methyl 1,4 Butane Diol Mono- and Di- Esters of Linoleic Acid | Highly Active |

TABLE 6: SPECTRAL DATA OF DIOL ESTERS SYNTHESISED IN EXAMPLE 1

(dl) 2-methyl 1,4-butane diol

| | IR (ca.1720 $cm^{-1}$) | $^1$H-NMR |
|---|---|---|
| Palmitate-monoester | Yes | 3.5(D),3.7(T),3.95(d) 4.2(T) |
| Palmitate-diester | Yes | 3.95(D),4.2(T) |
| Stearate-monoester | Yes | 3.5(D),3.7(T),3.95(D),4.2(T) |
| Stearate-diester | Yes | 3.95(D),4.2(T) |
| Oleate-monoester | Yes | 3.5(D),3.7(T),3.95(D),4.2(T),5.3(T) |
| Oleate-diester | Yes | 3.95(D),4.2(T),5.3(T) |
| Linoleate-monoester | Yes | 2.8(T),3.5(D),3.7(T),3.95(D),4.2(T),5.3(T) |
| Linoleate-diester | Yes | 2.8(T),3.95(D),4.2(T),5.3(T) |
| Linolenate-monoester | Yes | 2.8(T),3.5(D),3.7(T),3.95(D),4.2(T),5.3(T) |
| Linolenate-diester | Yes | 2.8(T),3.95(D),4.2(T),5.3(T) |

(D) = doublet peak
(T) = triplet peak

## TABLE 7

## $^1$H-NMR SPECTRUM OF SYNTHETIC LINOLENATE MONOESTER OF 2-METHYL 1,4 BUTANE DIOL

| Assignment | Ppm | Multiplicity* |
|---|---|---|
| $-CH_2-\underline{CH}_3$ | 0.93 | t |
| $-CH_2-CH(-)-\underline{CH}_3$ | 1.00 | d |
| $-(\underline{CH}_2)_n-$ | 1.32 | s |
| $-CH_2-\underline{CH}_2-CH_2OH$ | 1.59 | q Not well resolved |
| $-\underline{CH}_2-CH=CH-$ | 1.72 | q Not well resolved |
| $-CH_2-\underline{CH}(CH_3)-CH_2-$ | 2.06 | m |
| $-\underline{CH}_2-CH_2-CO-O-$ | 2.30 | t |
| $-CH=CH-\underline{CH}_2-CH=CH-$ | 2.80 | t |
| $-CO-O-CH_2-CH_2-CH(CH_3)-\underline{CH}_2OH$ | 3.54 | d |
| $-CO-O-CH_2-CH(CH_3)-CH_2-\underline{CH}_2OH$ | 3.72 | t |
| $-CO-O-\underline{CH}_2-CH(CH_3)-CH_2-CH_2OH$ | 3.96 | d |
| $-CO-O-\underline{CH}_2-CH_2-CH(CH_3)-CH_2OH$ | 4.18 | t |
| $-\underline{CH}=\underline{CH}-$ | 5.37 | t |

* s = singlet d = doublet t = triplet q = quartet m = multiplet

CLAIMS

1. A method of influencing the growth and/or yield of plants, characterised in that plants are treated directly or indirectly with a composition containing an effective amount of an aliphatic acid ester of a diol having the general formula:

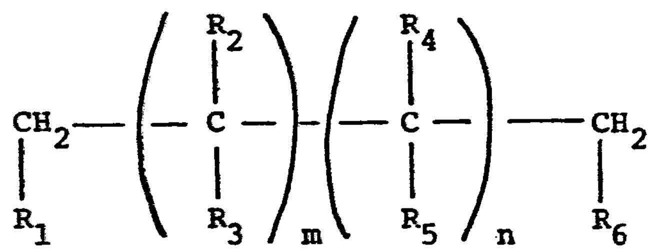

wherein $R_1$ is hydrogen or OH, $R_2$ is hydrogen or OH or alkyl ($C_1$-$C_4$), $R_3$ is hydrogen, OH or alkyl ($C_1$-$C_4$), $R_4$ is hydrogen, OH or alkyl ($C_1$-$C_4$), $R_5$ is hydrogen or OH or alkyl ($C_1$-$C_4$), $R_6$ is hydrogen or OH, m is any number from 0 to 30, n is any number from 0 to 30 and (m+n) is not greater than 30, preferably not greater than 7, and more preferably not greater than 3, and wherein the aliphatic acid (or, in the case of a di-ester, at least one of the aliphatic acids) contains from 4 to 36 carbon atoms.

2. A method according to claim 3, characterised in that (m+n) is 1 or 2.

3. A method according to either of the preceding claims, characterised in that $R_2$, $R_3$, $R_4$ and $R_5$ are all hydrogen.

4. A method according to any one of claims 1-3, characterised in that $R_2$ or $R_4$ is alkyl, preferably methyl, the other being hydrogen, and $R_3$ and $R_5$ are hydrogen.

5. A method according to claim 2, characterised in that the diol is 1,3-propane diol.

6. A method according to claim 2, characterised in that the diol is (dl) 2-methyl-1,4-butane diol.

7. A method according to any one of the preceding claims, characterised in that the aliphatic acid residue(s) contain(s) at least 12 carbon atoms but not more than 30 carbon atoms, preferably from 16 to 18 carbon atoms.

8. A method according to any one of the preceding claims, characterised in that the aliphatic acid residue(s) is/are straight-chain residues.

9. A method according to any one of claims 1 to 8, characterised in that the diol contains at least one unsaturated aliphatic acid residue having a degree of unsaturation from 1 to 3.

10. A method according to claim 9, characterised in that the diol ester contains one or two of the following aliphatic acid residues: oleate, linoleate and linolenate.

11. A method according to any one of the preceding claims, characterised in that the diol ester contains two long-chain aliphatic acid residues.

12. A method according to claim 2, characterised in that the composition contains one or more of the following compounds: 1,3-propane diol mono-oleate, 1,3-propane diol di-oleate, 1,3-propane diol mono-linoleate, 1,3-propane diol di-linoleate, 1,3-propane diol mono-linolenate, 1,3-propane diol di-linolenate, (dl) 2-methyl 1,4-butane diol mono-oleate, (dl) 2-methyl 1,4-butane diol di-oleate (dl) 2-methyl 1,4-butane diol mono-linoleate, (dl) 2-methyl 1,4-butane diol di-linoleate, (dl) 2-methyl 1,4-butane diol mono-linolenate and (dl) 2-methyl 1,4-butane diol di-linolenate.

13. A plant treatment composition comprising, in dilute aqueous suspension, dispersion or emulsion, from 0.01 to 25 ppm of at least one diol ester as defined in any one of claims 1-12, the stability of the composition being enhanced by the presence of one or more non-aqueous solvents and/or one or more emulsifying agents.

14. A concentrate comprising one or more diol esters as defined in any one of claims 1-12 in a non-aqueous solvent together with one or more emulsifying agents in an amount sufficient to provide a stable composition when the concentrate is diluted with water to provide a plant treatment composition.

15. A concentrate comprising one or more diol esters as defined in any one of claims 1-12 in an aqueous emulsion, the emulsion being rendered stable by the presence of one or more emulsifying agents.

16. A process for the preparation of a plant treatment composition in concentrate form, characterised in that a diol containing from 2-5 carbon atoms is reacted with one or more $C_{16}$-$C_{18}$ unsaturated aliphatic acids in a

water-immiscible organic solvent, and optionally in the presence of an esterification catalyst, the reaction being conducted at elevated temperature in an enclosed reaction vessel fitted with means for re-cycling the solvent/reactant mix and separating therefrom water generated during the reaction, and following termination of the reaction the reaction product is recovered and formulated into a concentrate dilutable with water to provide a plant treatment composition.

17. A process according to claim 16, characterised in that any unreacted aliphatic acid present in the reaction product is neutralised with an alkali and left in the product.

18. A process according to claim 16 or claim 17, characterised in that the diol is 1,3-propane diol and/or (dl) 2-methyl 1,4-butane diol.

19. A process according to any one of claims 16-18, characterised in that the aliphatic acid comprises one or more of the following acids: oleic acid, linoleic acid and linolenic acid.

20. A plant treatment composition comprising, in dilute aqueous suspension, dispersion or emulsion, the reaction product of a process according to any one of claims 16-19.

21. A method for enhancing the growth and/or economic yield of plants, characterised in that whole plants, or roots, or seeds, or plant tissue in a clonal propagation, or a plant growing medium, are treated with the reaction product of a process according to any one of claims 16-19.

22. A plant treatment composition in the form of a granular product comprising a particulate carrier material and one or more diol esters as defined in any one of claims 1-12, and/or the reaction product of a process according to any one of claims 16-19.

23. A diol ester of the general formula:

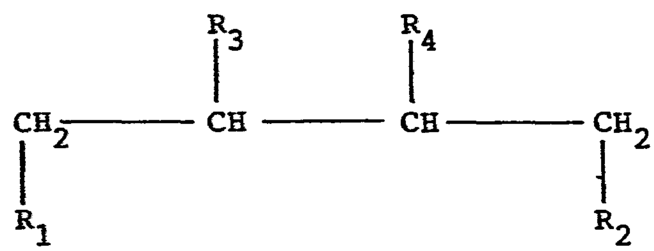

wherein $R_1$ is OH or an aliphatic acid residue containing from 1-36 carbon atoms, $R_2$ is an aliphatic acid residue containing from 4-36 carbon atoms, $R_3$ is hydrogen or $C_1$-$C_4$ alkyl, preferably methyl, and $R_4$ is hydrogen or methyl with the proviso that $R_3$ and $R_4$ cannot both be methyl.

24. A diol ester according to claim 23, characterised in that $R_1$ is OH.

25. A diol ester according to claim 23, characterised in that $R_1$ is an aliphatic acid residue containing from 4-36 carbon atoms, preferably from 12-30 carbon atoms, and more preferably from 16-18 carbon atoms.

26. A diol ester according to any one of claims 23-25, characterised in that $R_2$ contains from 12-30 carbon atoms, preferably from 16-18 carbon atoms.

27. A diol ester according to any one of claims 23-26, characterised in that $R_1$ and/or $R_2$ is an unsaturated straight-chain aliphatic acid residue in which the degree of unsaturation is from 1-3.

28. Any of the following compounds: (dl) 2-methyl 1,4-butane diol mono-stearate, (dl) 2-methyl 1,4-butane diol di-stearate, (dl) 2-methyl 1,4-butane diol mono-palmitate, (dl) 2-methyl 1,4-butane diol di-palmitate, (dl) 2-methyl 1,4-butane diol mono-oleate, (dl) 2-methyl 1,4-butane diol di-oleate, (dl) 2-methyl 1,4-butane diol mono-linoleate, (dl) 2-methyl 1,4-butane diol di-linoleate, (dl) 2-methyl 1,4-butane diol mono-linolenate and (dl) 2-methyl 1,4-butane diol di-linolenate.

Fig. 1.

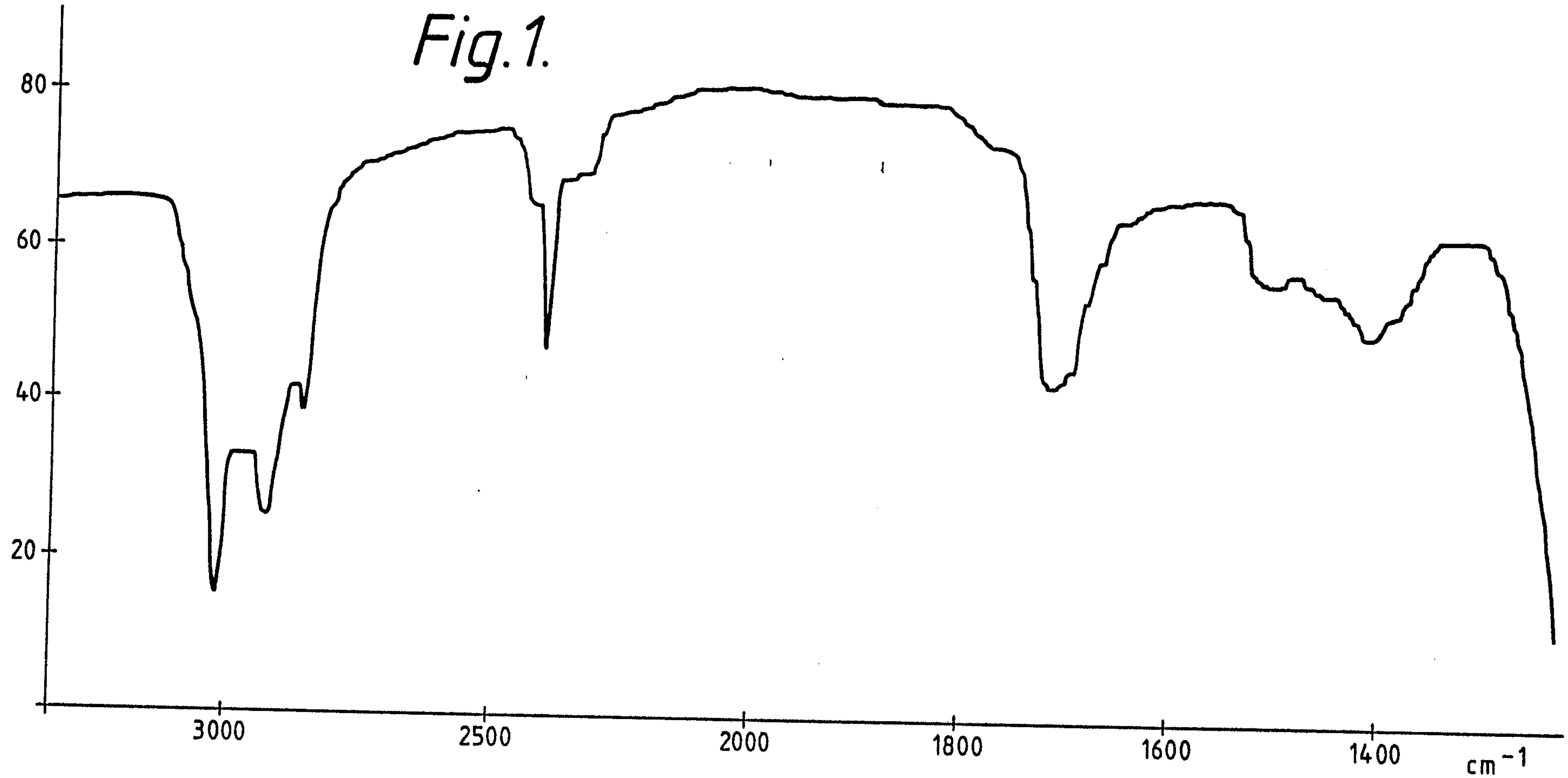

Fig.2.

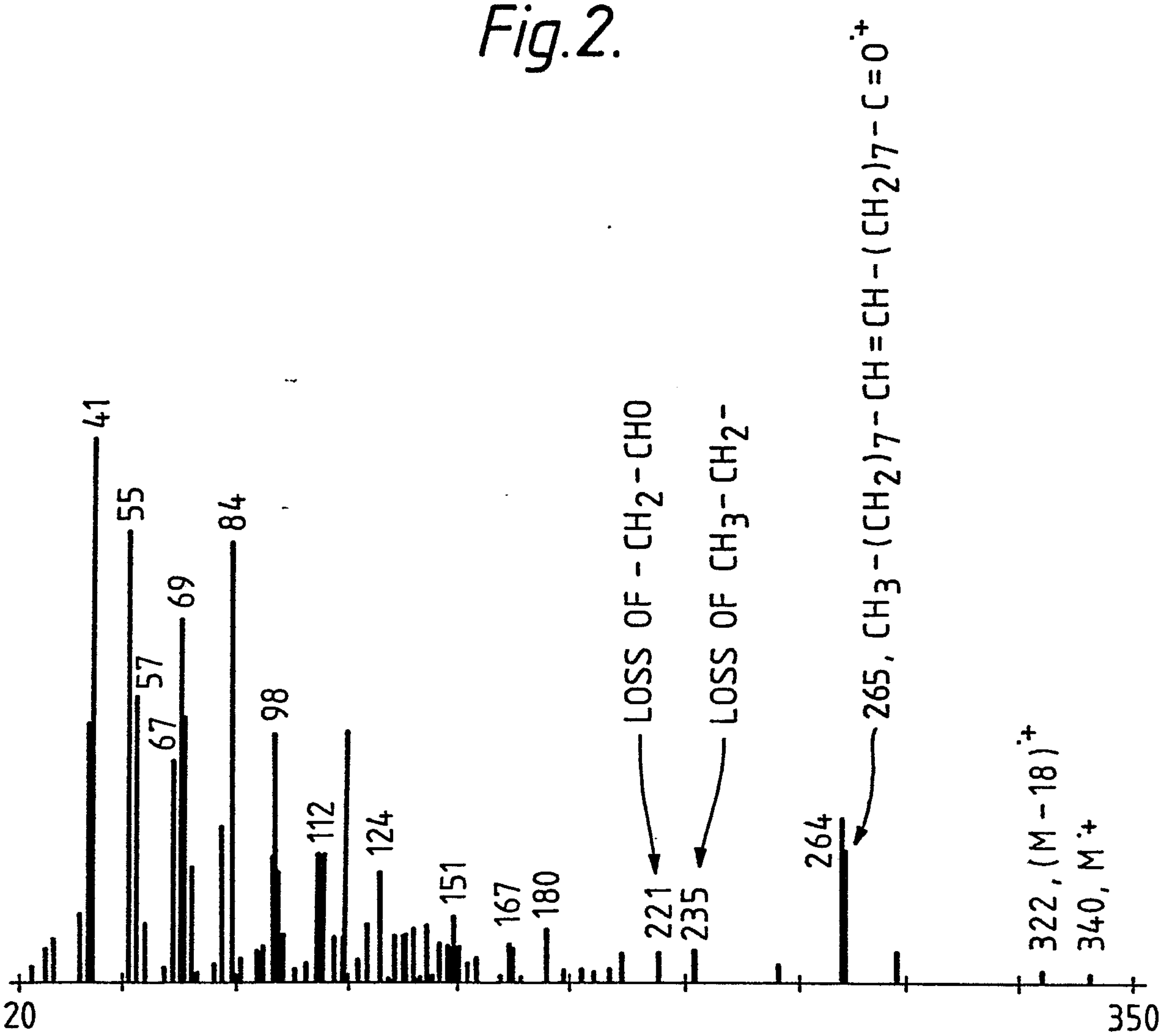
41
55
57
67
69
84
98
112
124
151
167
180
LOSS OF $-CH_2-CHO$
221
LOSS OF $CH_3-CH_2-$
235
264
265, $CH_3-(CH_2)_7-CH=CH-(CH_2)_7-C=O^{\cdot+}$
322, $(M-18)^{+}$
340, $M^{\cdot+}$
20
350

Fig.3.

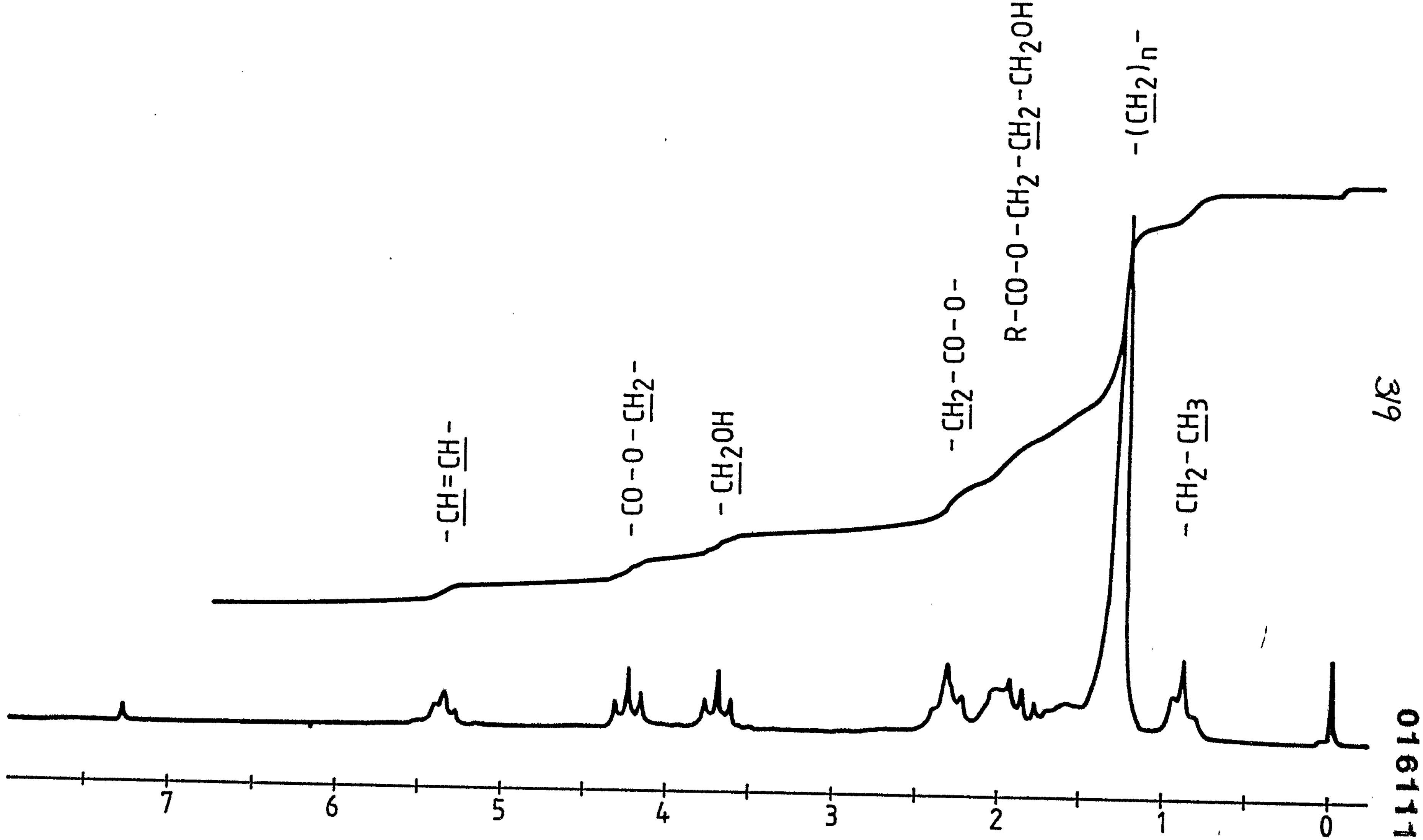
-CH=CH-
-CO-O-CH2-
-CH2OH
-CH2-CO-O-
R-CO-O-CH2-CH2-CH2OH
-(CH2)n-
-CH2-CH3
7
6
5
4
3
2
1
0

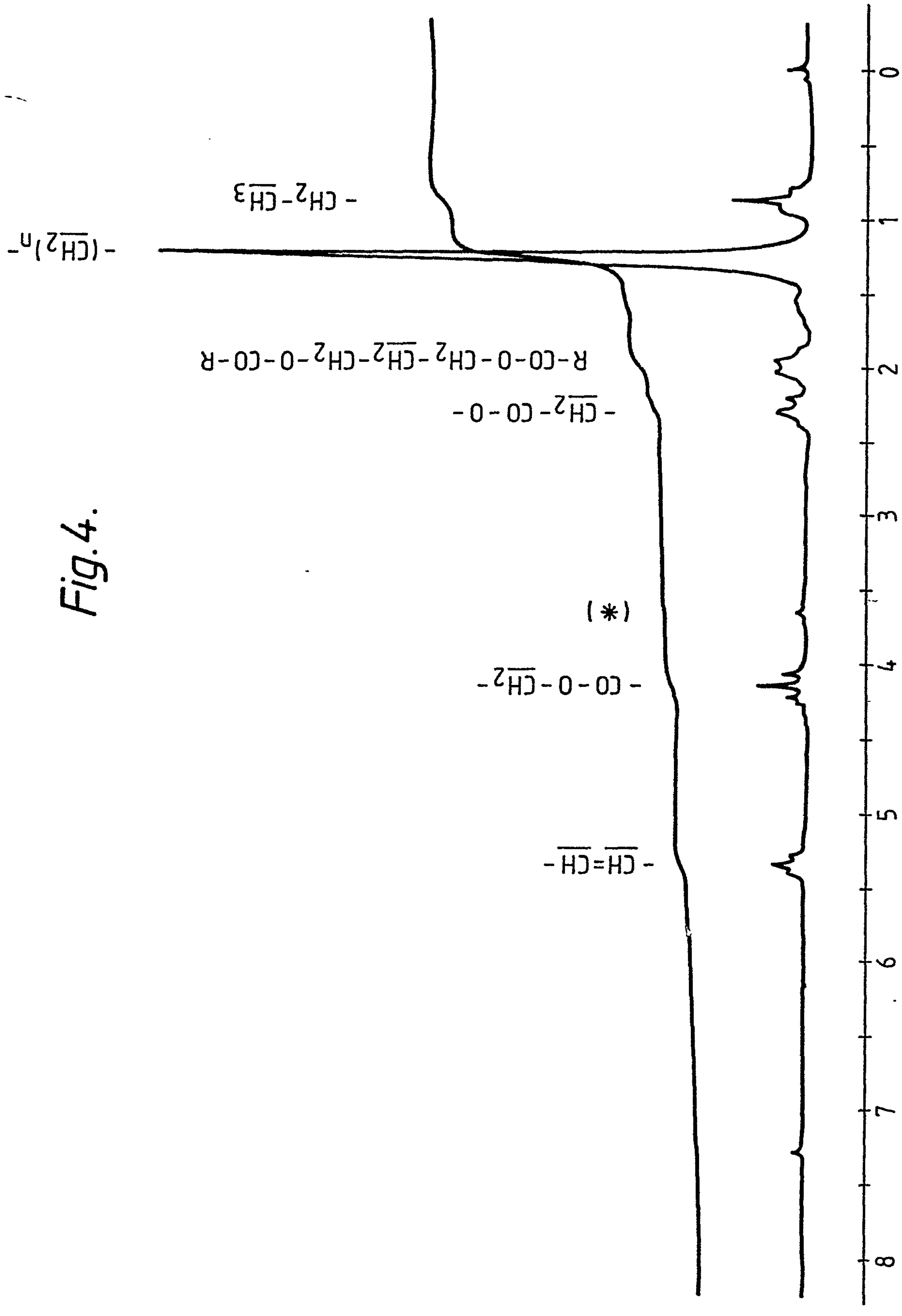
-(CH2)n-
-CH2-CH3
R-CO-O-CH2-CH2-CH2-O-CO-R
-CH2-CO-O-
(*)
-CO-O-CH2-
-CH=CH-
0
1
2
3
4
5
6
7
8

Fig.4.

Fig.5.

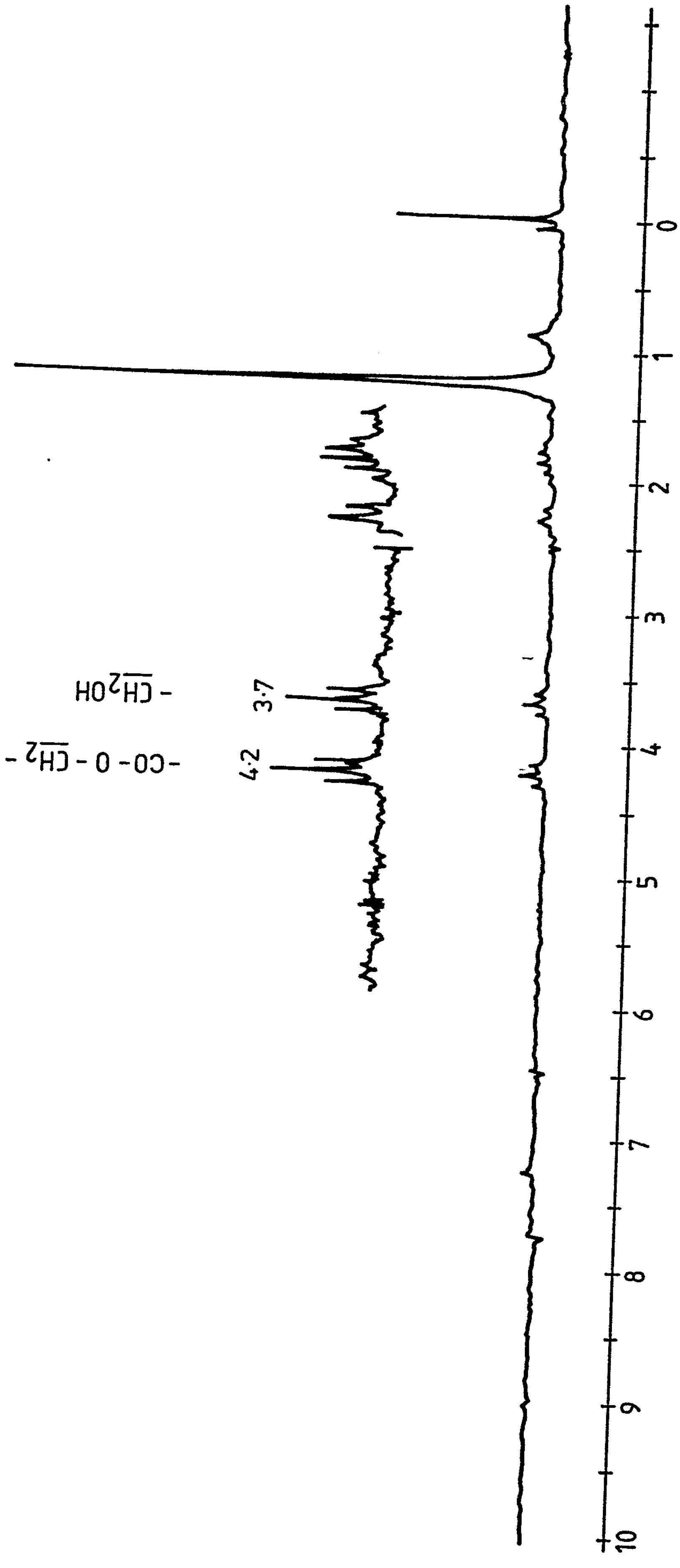

Fig. 6.

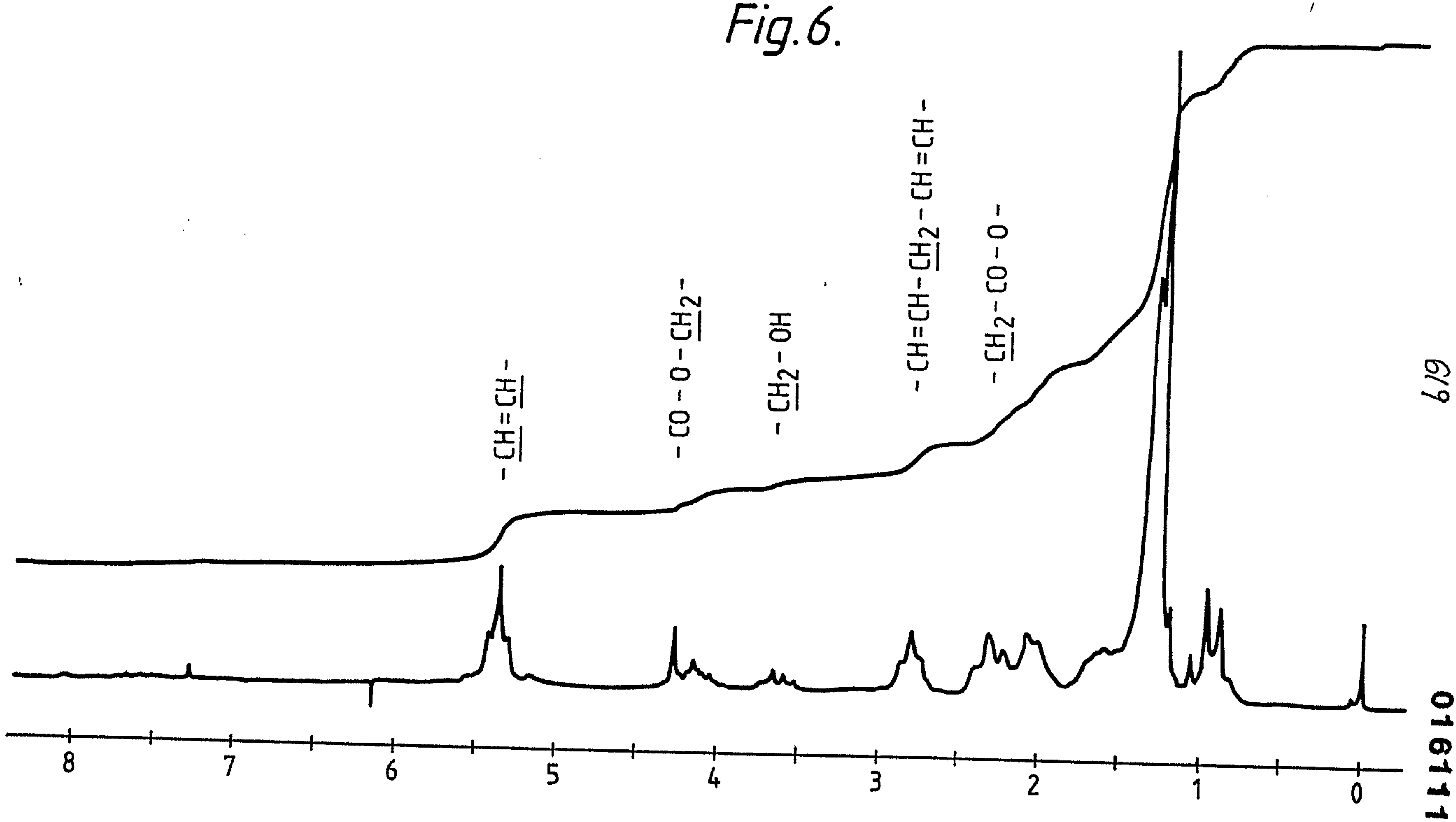

Fig.7.

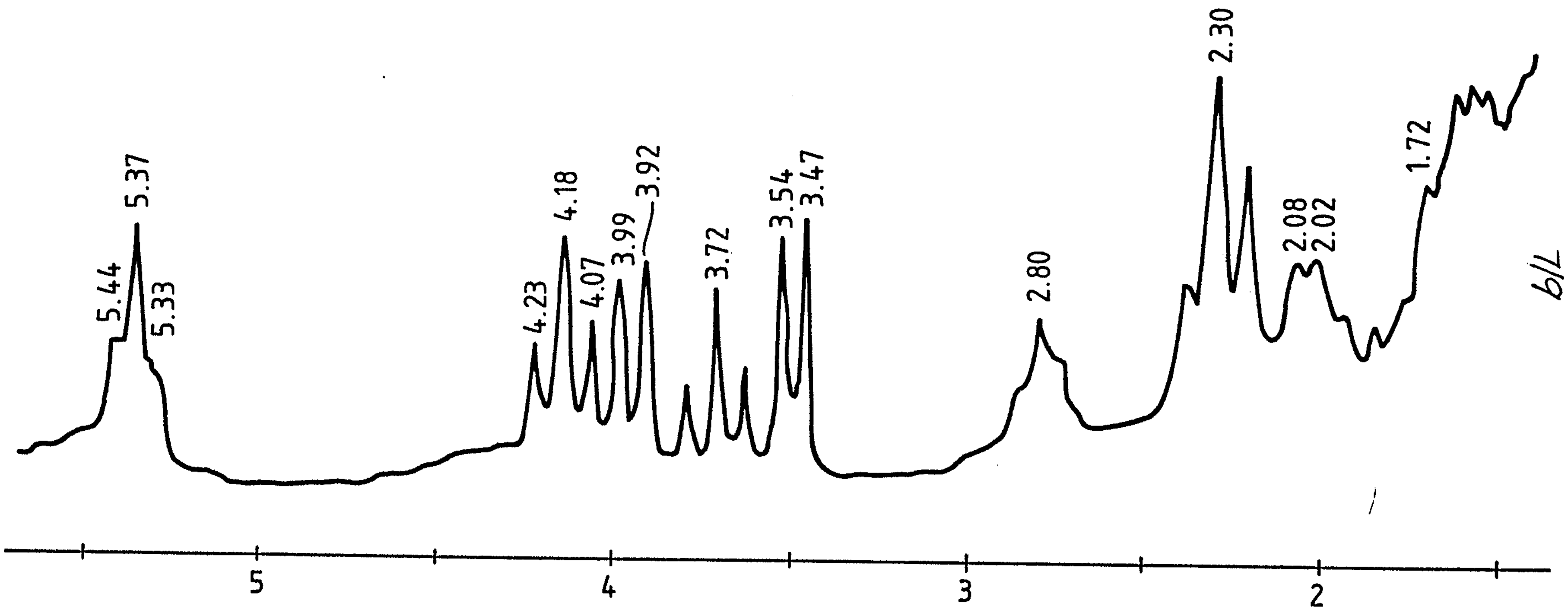

5.44
5.37
5.33
4.23
4.18
4.07
3.99
3.92
3.72
3.54
3.47
2.80
2.30
2.08
2.02
1.72
5
4
3
2

Fig.8.

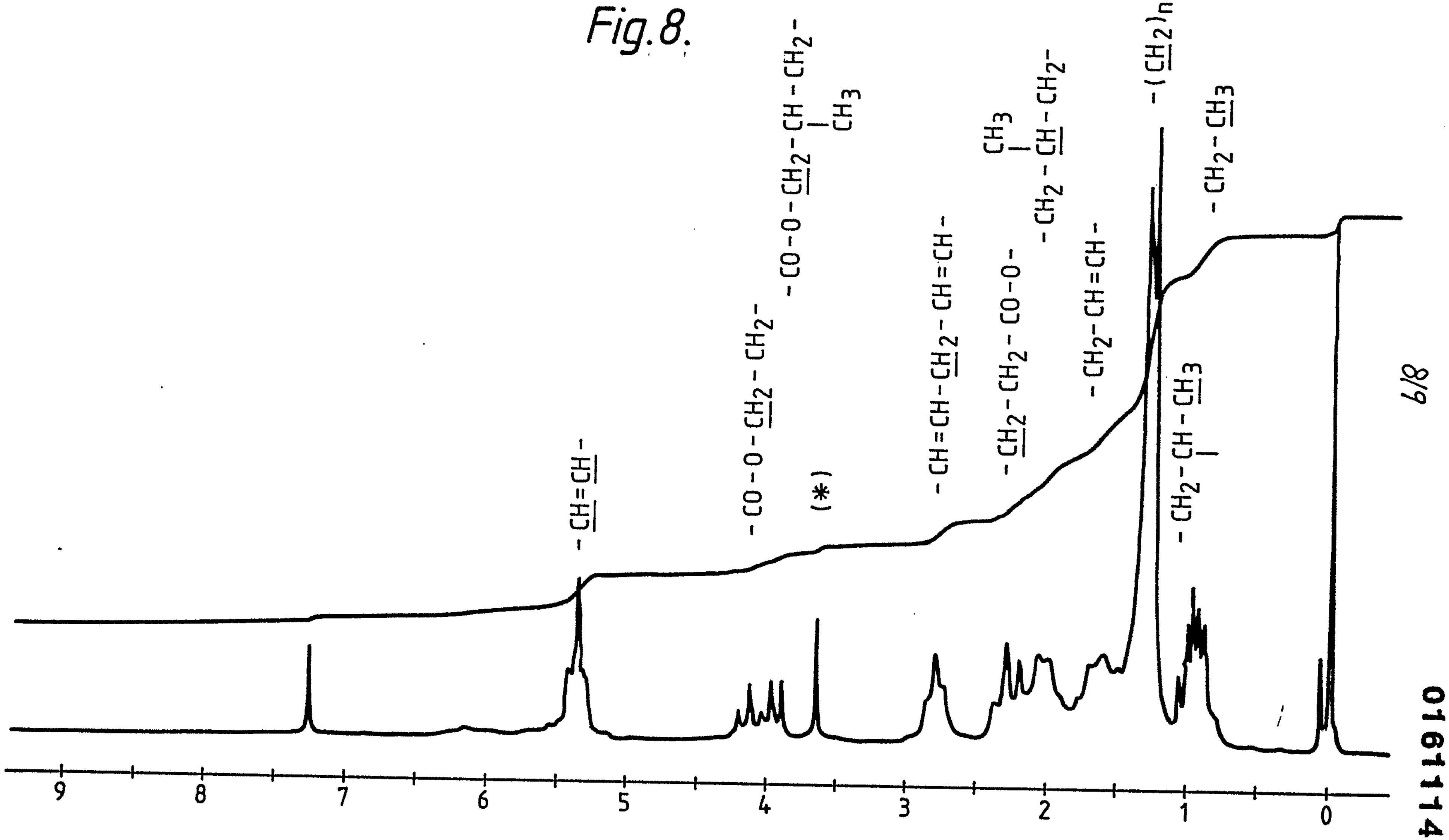
- CO - O - CH2 - CH - CH2 -
CH3
(*)
- CO - O - CH2 - CH2 -
- CH = CH -
- CH = CH - CH2 - CH = CH -
- CH2 - CH2 - CO - O -
- CH2 - CH - CH2 -
CH3
- CH2 - CH = CH -
- (CH2)n -
- CH2 - CH - CH3
- CH2 - CH3
9
8
7
6
5
4
3
2
1
0

Fig. 9.

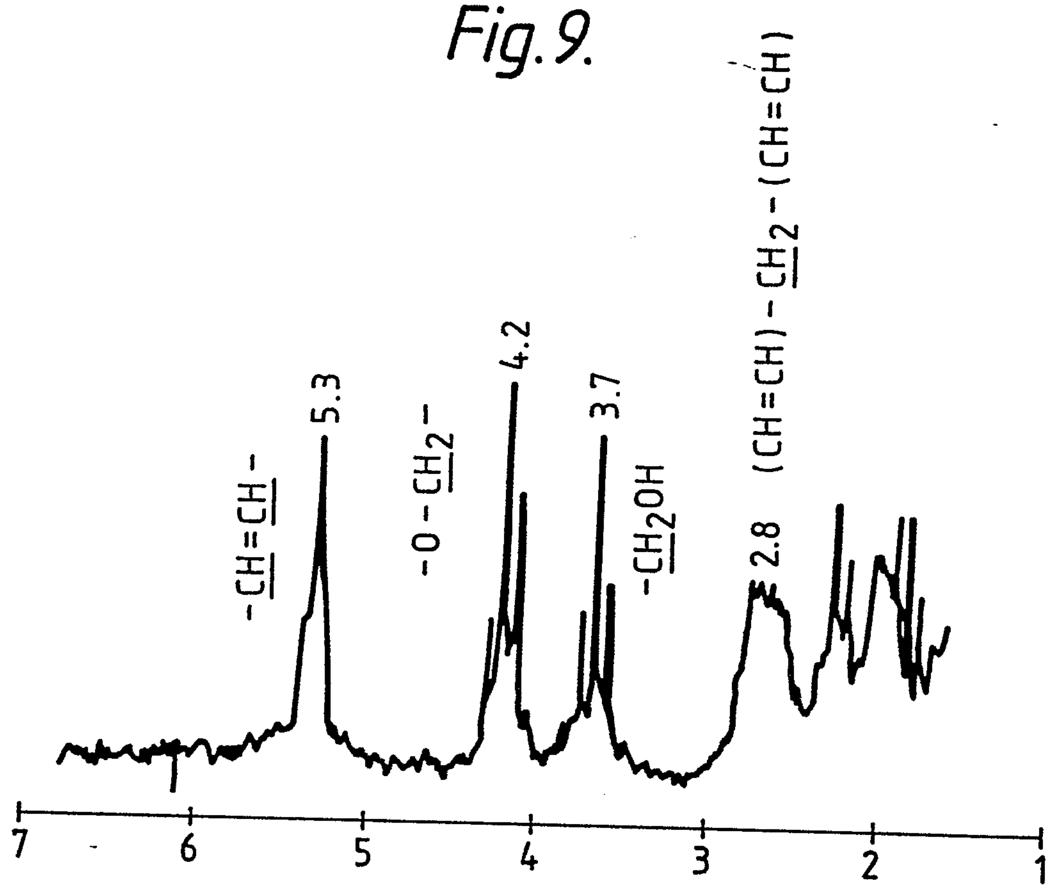


Fig. 10.